# EUROPEAN PATENT APPLICATION

(11) **EP 4 618 393 A1**
(43) Date of publication of application: **17.09.2025**
(21) Application number: 24163230.6
(22) Date of filing: 13.03.2024
(51) Int. Cl.: H02M 3/00, H02M 3/335

(54) **A RESONANT CONVERTER**

(71) Applicant: Infineon Technologies Austria AG, 9500 Villach (AT)
(72) Inventor: TANG, Benjamim, Rancho Palos Verdes, 90275 (US)
(74) Representative: Elkington and Fife LLP

(57) **Abstract**

A resonant converter is provided, comprising a switching bridge, a resonant tank, a transformer and a rectifier. The resonant tank comprises a resonant capacitor, a resonant inductance, and a parallel inductance or a parallel capacitor. Furthermore, the resonant converter comprises a sensor configured to measure a voltage across the resonant capacitor of the resonant tank, the sensor comprising a first DC block connected to a first side of the resonant capacitor, and configured to output a sensed value of the voltage on the first side of the resonant capacitor. From the voltage across the resonant capacitor, a resonant state of the resonant converter may be identified. Also disclosed is a circuit for measuring a voltage across a resonant capacitor of a resonant tank of a resonant converter, and an associated method for determining a resonant state of a resonant converter.

## Description

### FIELD OF THE INVENTION

This invention relates to resonant converters. In particular, it relates to identifying resonant state information of the resonant converter.

### BACKGROUND OF THE INVENTION

Resonant converters are a type of DC-DC converter that utilise a resonant tank, comprising combinations of inductors and capacitors, to reduce switching losses and switching noise by virtue of soft switching. Accordingly, resonant converters are ideal for use in high power applications as switching converter voltage regulators and DC supplies.

By way of explanation, resonant converters comprise a switching bridge (i.e., switching network), a resonant tank, and a transformer and rectifier. The switching bridge converts an input DC voltage, and provides a square wave voltage. The resonant tank smooths the square wave voltage to produce an approximate sine wave current in the resonant tank, and an approximate square wave voltage, or intermediate voltage, across the primary side winding of the transformer. Popular resonant tanks include series resonant converters, parallel resonant converters, and series-parallel resonant converters such as LCC and LLC converters. The transformer then transfers the intermediate voltage from a primary side to a secondary side, whilst scaling the intermediate voltage according to the turns ratio of the transformer, and the rectifier converts the AC voltage on the secondary side to a DC output voltage.

Understanding the resonant state, i.e., the instantaneous current in the inductors and voltage across the capacitors, is important for telemetry, control, protection and timing optimization of the resonant converter. Typically, the resonant current is sensed using a current sensor that can be interfaced across the isolation boundary, usually through a transformer or optical isolator. However, it is complex to transport this signal across the isolation boundary of the resonant converter. Transporting the signal across the isolation boundary often results in loss of resonant current information due to noise and offset, with small amplitude signals in the current sensor.

Accordingly, there exists a need for an improved means for identifying resonant state information of the resonant converter.

### SUMMARY OF THE INVENTION

According to one aspect of the invention, there is provided a resonant converter. The resonant converter comprises:
a switching bridge configured to receive an input DC voltage, and to output a square wave voltage;
a resonant tank comprising a resonant capacitor, a resonant inductance, and a parallel inductance or a parallel capacitor, wherein the resonant tank is configured to receive the square wave voltage from the switching bridge, and to produce an intermediate voltage;
a transformer comprising a primary side winding and a secondary side winding, wherein the primary winding is configured to receive the intermediate voltage, and the secondary side winding is configured to produce a scaled intermediate voltage;
a rectifier configured to receive the scaled intermediate voltage from the secondary side, and to output an output voltage; and
a sensor configured to measure a voltage across the resonant capacitor of the resonant tank, the sensor comprising a first DC block connected to a first side of the resonant capacitor, and configured to output a sensed value of the voltage on the first side of the resonant capacitor.

A resonant converter is therefore provided, comprising a switching bridge, a resonant tank, a transformer and a rectifier. The resonant tank comprises a resonant capacitor, a resonant inductance, and a parallel inductance or a parallel capacitor. Furthermore, the resonant converter comprises a sensor configured to measure a voltage across the resonant capacitor of the resonant tank, the sensor comprising a first DC block connected to a first side of the resonant capacitor, and configured to output a sensed value of the voltage on the first side of the resonant capacitor. From the voltage across the resonant capacitor, a resonant state of the resonant converter may be identified.

In other words, it is proposed to sense the voltage across the resonant capacitor by AC coupling the first side of the resonant capacitor, which is not connected to a reference potential such as ground. Accordingly, the sensed value of the volage may be provided on a secondary side of the resonant converter (i.e., a side with the secondary side winding and rectifier) to a controller to extract resonant state information for control, telemetry, protection, and timing optimizations.

Existing solutions for identifying resonant state information typically sense a value of resonant inductor current using a current sensor that can be interfaced across the isolation boundary between the first and second side of the resonant converter. The interface across the isolation boundary may be achieved via a transformer or an optical isolator. However, such solutions are complex and expensive to implement, and often result in loss of information across the isolation boundary. In contrast, a DC block may be simple to implement whilst robustly transferring resonant state information, via the capacitor voltage, across the isolation boundary.

To be clear, the DC block is a circuit for blocking DC components of the voltage on the first side of the resonant capacitor. In other words, an AC coupler is provided, which passes AC components of the voltage on the first side of the resonant capacitor. The AC coupler acts as a high pass filter of the voltage signal on the first side of the resonant capacitor, blocking DC components of the voltage on the first side of the resonant capacitor.

In some implementations, the first DC block may comprise a capacitor and a resistor connected in series with the capacitor between the first side of the resonant capacitor and the capacitor.

The first DC block may thus be a relatively cheap, simple to implement, robust and space efficient means for providing a sensed value of the voltage on the first side of the capacitor. Only passive resistive and capacitive components are required (i.e., no transformers), reducing complexity, and the sensed values of the voltage may be more immune to noise and offset across the isolation boundary.

In some embodiments, a second side of the resonant capacitor may be connected to a reference potential.

For example, the reference potential may be a ground potential. In this case, sensing/measuring the voltage on the first side may be sufficient for identifying the voltage across the resonant capacitor. Nevertheless, if the second side is not connected to a reference potential, the first DC block may still provide a sensed voltage value useful for determining some parameters indicative of the resonant state of the resonant converter.

The sensor further may comprise a voltage divider configured to receive the sensed value of the voltage on the first side of the resonant capacitor, and to output a scaled version of the sensed value of the voltage on the first side of the resonant capacitor.

The voltage divider may be a resistive divider or a capacitive divider. This may allow the gain and sampling frequency of the sensor circuit to be adjusted, providing a robust scaled value of the voltage.

In some embodiments, the sensor may further comprise a second DC block connected to a second side of the resonant capacitor, and configured to output a sensed value of the voltage on the second side of the resonant capacitor.

Accordingly, a differential structure is provided, sensing voltage on both sides of the resonant capacitor and so providing a value of the voltage across the resonant converter. This may be useful for eliminating some sources of noise, as well as for when the second side is floating (i.e., not connected to a reference potential or ground on the second side so it may be connected to the load ground).

The sensor further may further comprise a voltage divider configured to receive the sensed value of the voltage on the first side of the resonant capacitor and the sensed value of the voltage on the second side of the resonant capacitor, and to output a scaled version of the sensed value on the first side, and a scaled version of the sensed value on the second side.

The voltage divider may be a resistive divider or a capacitive divider. This may allow the gain and sampling frequency of the sensor circuit to be adjusted, providing a robust scaled value of the voltage on both the first side and the second side of the resonant capacitor.

The resonant converter may further comprise a controller configured to receive the sensed value of the voltage on the first side of the resonant capacitor; and identity a value of the voltage across the resonant capacitor based on the sensed value of the voltage on the first side.

In further embodiments, there may be provided a sensor interface configured to adapt the sensed value (or the scaled version of the sensed value) to a format readable by a controller. For example, the sensor interface may comprise an ADC, a sampling circuit, comparators, s differential amplifier, or any combination thereof.

The controller thus provides a value of the voltage across the resonant capacitor, which may be stored for future processing, or processed in real time. Said value may be used to determine the resonant state of the primary side of the resonant converter, which in turn may be used for protection, control, telemetry and timing purposes.

Alternatively, the resonant converter may comprise a controller configured to receive the sensed value of the voltage on the first side of the resonant capacitor; receive the sensed value of the voltage on the second side of the resonant capacitor; and identify a value of the voltage across the resonant capacitor based on the sensed value of the voltage on the first side and the sensed value of the voltage on the second side.

Indeed, in the case that a first and second DC block are provided, the controller may be configured to take a difference between the sensed values of the voltage on the different sides of the resonant capacitor to identify a voltage across the resonant capacitor.

In either case, the controller may be further configured to process the identified value of the voltage across the resonant capacitor to identify resonant state information of the resonant converter.

In particular, since system information such as the values of the inductance and capacitances, the resonant frequency, the amplitude of the voltages and currents, the phase of the sinusoid current and voltages, the input voltage, and the output voltage are all related, then there are multiple combinations where the unknown can be inferred from the known and sensed information. For example, if the input voltage, output voltage, the nominal resonant inductance and capacitance values, and the instantaneous resonant capacitance voltage is known, then the resonant frequency, amplitude of the resonant inductance current, amplitude of the transformant current, amplitude of the resonant capacitance voltage, phase of the sinusoid current and voltage can all be inferred.

This may be achieved in any manner known to the skilled person. That is, the identified value of the voltage may be input to an algorithm to determine the state of other parameters of the primary side of the resonant converter. Alternatively, the identified value of the voltage across the resonant capacitor may be stored, or simply added to a series of previous identified values thus constructing a view of the time varying voltage across the resonant capacitor.

More particularly, the controller may be configured to process the identified value of the voltage across the resonant capacitor to identify any one or any combination of two or more of:
a current through the resonant inductance;
a current through the parallel inductance or the parallel capacitor;
a magnitude of the input DC voltage;
an input current received by the switching bridge;
an input power to the switching bridge;
a drive delay of a switch of the switching bridge; and
a switch delay of a switch of the switching bridge.

In some implementations, the resonant tank is an LLC resonant tank comprising the resonant capacitor, the resonant inductance, and the parallel inductance. In this case, the resonant inductance and the parallel inductance may be provided by the primary side winding of the transformer.

As a result of the resonant inductance and the parallel inductance being provided by the primary side winding, a number of components required to realise the resonant converter may be reduced. This may save space and cost of the resonant converter.

In other implementations, the resonant tank may be an LCC resonant tank comprising the resonant capacitor, the resonant inductance, and the parallel capacitor. In this case, the resonant inductance may be provided by the primary side winding of the transformer.

As a result of the resonant inductance being provided by the primary side winding, a number of components required to realise the resonant converter may be reduced. This may save space and cost of the resonant converter.

Also provided is a circuit for measuring a voltage across a resonant capacitor of a resonant tank of a resonant converter. The resonant converter comprises a switching bridge configured to receive an input DC voltage, and to output a square wave voltage; a resonant tank comprising a resonant capacitor, a resonant inductance, and a parallel inductance and/or a parallel capacitor, wherein the resonant tank is configured to receive the square wave voltage from the switching bridge, and to produce an intermediate voltage; a transformer comprising a primary side winding and a secondary side winding, wherein the leakage inductance is provided by the primary side winding, and the transformer is configured to provide a scaled intermediate voltage at the secondary side; a rectifier configured to receive the scaled intermediate voltage from the secondary side, and to output an output voltage

The circuit comprises a first DC block configured to connect to a first side of the resonant capacitor, and configured to output a sensed value of the voltage on the first side of the resonant capacitor.

In addition, there is provided a method for determining a resonant state of a resonant converter. The resonant converter comprises a switching bridge configured to receive an input DC voltage, and to output a square wave voltage; a resonant tank comprising a resonant capacitor, a resonant inductance, and a parallel inductance and/or a parallel capacitor, wherein the resonant tank is configured to receive the square wave voltage from the switching bridge, and to produce an intermediate voltage; a transformer comprising a primary side winding and a secondary side winding, wherein the leakage inductance is provided by the primary side winding, and the transformer is configured to provide a scaled intermediate voltage at the secondary side; a rectifier configured to receive the scaled intermediate voltage from the secondary side, and to output an output voltage. The method comprises:
measuring a voltage across the resonant capacitor of the resonant tank;
processing the measured voltage to identify resonant state information of the resonant converter.

In some embodiments, the method may further comprise controlling the resonant converter based on the identified resonant state information.

### BRIEF DESCRIPTION OF THE DRAWINGS

The invention will now be described by way of example with reference to the accompanying drawings, in which:
Fig. 1 is a circuit diagram showing a resonant converter according to a generalized example;
Fig. 2 is a circuit diagram of a resonant converter including a sensor according to an embodiment of the invention;
Fig. 3 is a circuit diagram of a resonant converter including a sensor according to another embodiment of the invention; and
Fig. 4 is a flow diagram of a method for determining a resonant state of a resonant converter.

It should be noted that these figures are diagrammatic and not drawn to scale. Relative dimensions and proportions of parts of these figures have been shown exaggerated or reduced in size, for the sake of clarity and convenience in the drawings.

### DETAILED DESCRIPTION

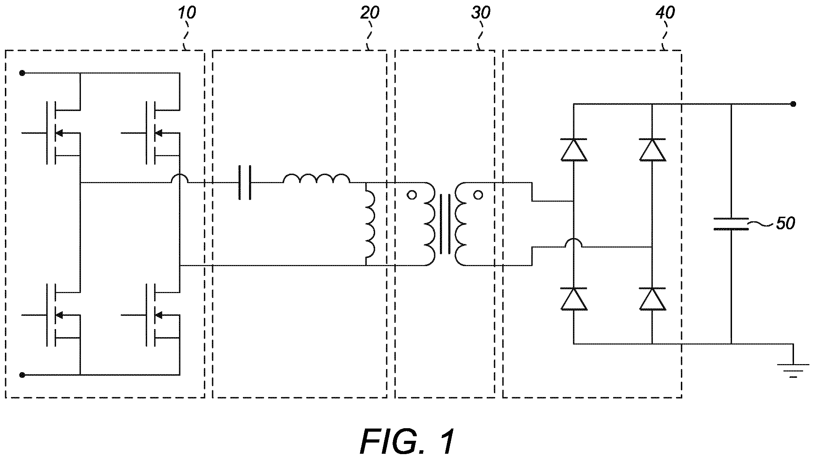

To understand the present disclosure, it is important to understand the operation of a resonant converter. A typical resonant converter is therefore depicted in Fig. 1.

The resonant converter comprises a switching bridge 10 configured to receive an input DC voltage, and to output a square wave voltage. That is, the switching bridge 10 generates a pulsating voltage from a DC input voltage source. The switching frequency of the switching bridge 10 will determine the frequency of the output square wave voltage.

As presented, the switching bridge 10 may be a full bridge DC to AC converter, comprising four switches (e.g., power MOSFETs). Equally, the switching bridge 10 may be a half bridge AC-DC converter, or other topology capable of converting an input DC voltage into a square wave voltage signal. In case of a full bridge topology, the square wave will not have a DC offset, whereas with a half bridge topology that is offset by half the DC input voltage. Advantages of the particular switching bridges are well known to the skilled person.

The resonant converter also comprises a resonant tank 20 which is formed of a combination of inductors and capacitors. At a minimum, the resonant tank 20 comprises a resonant capacitor, a resonant inductance, and a parallel inductance or a parallel capacitor.

As presented, the resonant tank 20 may be an LLC tank comprising a resonant capacitor, a resonant inductor, and a parallel inductor. In this case, the resonant converter is an LLC resonant converter. Alternatively, the resonant tank 20 may be an LCC tank comprising a resonant capacitor, a resonant inductor, and a parallel capacitor. In this case, the resonant converter is an LCC resonant converter.

The resonant tank 20 is configured to receive the square wave voltage from the switching bridge 10, and to produce an intermediate voltage. The intermediate may be an (imperfect) sine wave voltage. The resonant tank 20 smooths the square wave voltage signal to provide the intermediate voltage signal. That is, the resonant tank 20 removes at least some of the square wave harmonics, and provides a sinusoidal-like output voltage having a fundamental frequency dependent on the switching frequency of the switching bridge 10.

The resonant converter further comprises a transformer 30 comprising a primary side winding and a secondary side winding.

In the case that the resonant tank 20 is an LLC tank, the resonant inductance of the LLC tank may be provided by the leakage inductance of the transformer 30, and the parallel inductance may be provided by the magnetizing inductance of the transformer 30. That is, the resonant inductor and the parallel inductor are provided by the transformer 30. This may reduce a cost of the resonant converter by reducing a number of components needed.

In the case that the resonant tank 20 is an LCC tank, the resonant inductance of the LCC tank may be provided by the leakage inductance of the transformer 30. That is, the resonant inductor may be provided by the transformer 30.

In any case, the primary winding is configured to receive the intermediate voltage. That is, the primary side of the transformer 30 receives the intermediate voltage signal (i.e., the imperfect sine wave voltage signal). As a result, the secondary side winding produces a scaled intermediate voltage responsive to the primary side receiving the intermediate voltage. The scaled intermediate voltage signal may be a signal (e.g., a sine wave) similar to the intermediate voltage, but having a different amplitude. The amplitude of the scaled intermediate voltage will depend on the turns ratio between the primary winding and the secondary winding.

Finally, the resonant converter also comprises a rectifier 40. The rectifier 40 is configured to receive the scaled intermediate voltage from the secondary side, and to output an output voltage.

As depicted, the rectifier 40 may be a full wave diode rectifier. Alternatively, the rectifier 40 may be a half wave diode rectifier. Of course the diodes may also be replaced by active elements (e.g., switches). Other rectifier topologies would be readily appreciated and implemented by the skilled person.

Optionally, an output (filtering) capacitor 50 may be provided at the output of the rectifier 40. The output capacitor 50 may smooth the output voltage in order to provide a smoothed output voltage. Ideally, the output voltage will be a DC output voltage.

To be clear, the switching bridge 10, resonant tank 20 and primary side winding may be referred to as the primary side of the resonant converter, whilst the secondary side winding, rectifier 40 and (optional) output capacitor 50 may be referred to as the secondary side of the resonant converter. Typically, the primary side will be isolated from the secondary side. That is, there is an isolation boundary between components of the primary side and the secondary side. Accordingly, identifying the state of the primary side (which is isolated from other components) is complex to achieved.

It should be appreciated that the operation of the resonant converter depends on the frequency at which the switches of the switching bridge 10.

By way of example, when the depicted resonant converter operates at resonant frequency of the resonant tank 20 (i.e., when the switching bridge 10 produces a square wave voltage having a fundamental frequency equal to the resonant frequency of the resonant tank 20), the resonant tank 20 has unity gain and best optimized operation and efficiency. Accordingly, the transformer 30 turns ratio is typically designed such that the resonant converter operates at this point at nominal input and output voltages.

When the depicted resonant converter operates above resonant frequency of the resonant tank 20, the resonant half cycle is not completed before half of the switching cycle is completed. The switches of the switching bridge 10 experience increased turn off losses, and the secondary rectified diodes experience hard commutation. The resonant convert operates in this mode when buck operation is required.

When the depicted resonant converter operates below resonant frequency of the resonant tank 20, the resonant half cycle is completed before half of the switching cycle is completed. Accordingly, freewheeling operation occurs in the interim, and the primary side winding experiences increased conduction losses. The resonant convert operates in this mode when boost operation is required.

Accordingly, it is important to sense the resonant state of the resonant converter in order to determine appropriate control, telemetry, protection and timing operation of the resonant converter. Disclosed embodiments of the invention thus aim to provide information for sensing/identifying the resonant state, so that the resonant converter may be appropriately controlled.

Existing solutions provide that the current through the resonant inductor is sensed using a current sensor that can be interfaced across the isolation boundary. Usually the current sensor is interfaced across the isolation boundary through a transformer or optical isolator. However, this existing approach is expensive, has a large footprint, and is unreliable.

Disclosed embodiments thus provide an AC coupled resonant capacitor voltage sensor scheme that allows the resonant state of the resonant converter to be monitored. In particular, the resonant state space of the primary side (i.e., the switching bridge 10, resonant tank 20 and primary winding of the transformer 30) may be monitored. As a result, implementation and optimization of the control and protection features for the converter is facilitated.

Generally, concepts enable sensing of the voltage across the resonant capacitor using a DC block (i.e., an AC coupler). The output of the DC block may be scaled using a voltage divider, e.g., a capacitive or resistive divider. The voltage divider may then provide a scaled version of the sensed value of the voltage to a controller 70 to extract resonant state information for control, telemetry, protection, and timing optimizations.

This provides benefits over typical current sensors, with a simpler interface and more complete state information.

Furthermore, by virtue of the AC coupling/DC block, the sensed value of the voltage may be transferred to the secondary side of the resonant converter (i.e., the side comprising the secondary windings, and rectifier 40). This means that the controller 70, for processing of the sensed voltage information to determine resonant state information, may be provided on the secondary side of the resonant converter. This enables a simplified controller interface, since an interfacing does not need to cross the isolation boundary. Accordingly, system cost and complexity are reduced, and there may be a faster and more accurate output voltage and current response.

Put another way, to identify resonant state information, typically the resonant current is sensed using a current sensor that can be interfaced across the isolation boundary, usually through a transformer or optical isolator. The invention provides a cheap and effective alternative by capacitive coupling across the isolation boundary, which can be used to transfer AC coupled voltage signals across the isolation boundary.

It has been realised that the voltage across resonant capacitor provides a convenient parameter for determining the resonant state of the resonant converter. Unlike the resonant inductance current parameter (which is usually measured), the capacitor voltage is a state variable in all the different stages of the primary side drive.

Indeed, if the capacitor voltage, derivative of the capacitor voltage, and the state of the switching bridge 10 is known, all currents/voltages on primary side resonant converter can be computed. In particular, if the voltage across resonant capacitor is known, the following may be calculated:
(i) a current through the resonant inductance;
(ii) a current through the parallel inductance or the parallel capacitor;
(iii) a magnitude of the input DC voltage;
(iv) an input current received by the switching bridge 10;
(v) an input power to the switching bridge 10;
(vi) a drive delay of a switch of the switching bridge 10; and
(vii) a switch delay of a switch of the switching bridge 10.

Advantageously, the voltage across resonant capacitor can be AC coupled to secondary side of the resonant converter. That is, the voltage across the resonant capacitor can be sensed using a passing RC network. A DC block is therefore provided, and a voltage divider may also be provided to scale the sensed value of the voltage.

The voltage sensor comprises a DC block, which is a relatively cheap and simple sensor, requiring only a series capacitor and a resistor. Optionally, a series resistor and a parallel capacitor are provided to create resistance divider and capacitive divider structures, which allow the gain and frequency of the voltage sensor to be adjusted.

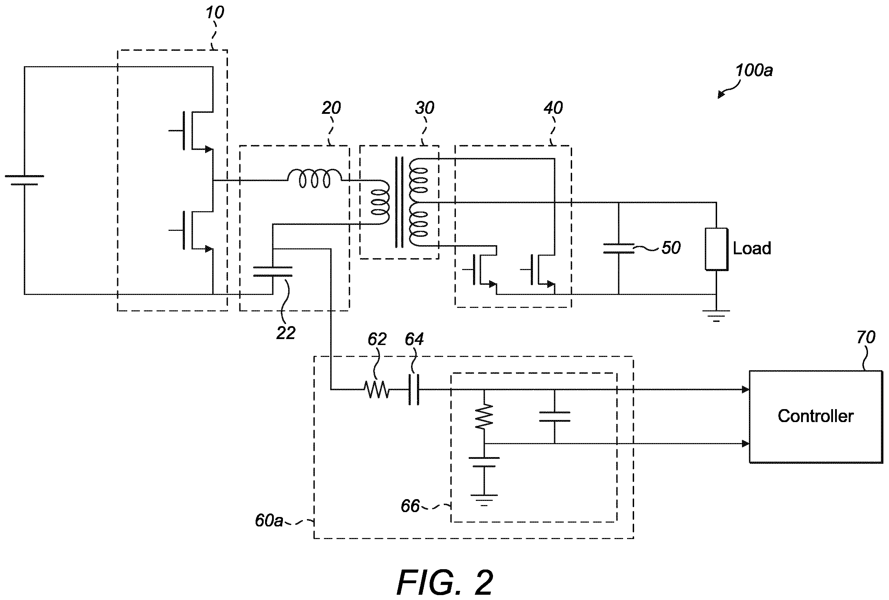

Fig. 2 is a circuit diagram of a resonant converter including a sensor according to a particular embodiment of the invention.

In the depicted embodiment, the switching bridge 10 is a half bridge having two switches controlled to output a square wave voltage having an offset, from the input DC voltage, Vᵢₙ.

The resonant tank 20 comprises a resonant capacitor 22, a resonant inductance, and a parallel inductance. That is, the depicted resonant tank 20 is an LLC resonant tank 20. Other resonant tanks may be employed, as long as there is series resonance, i.e., a series resonant capacitor 22 and resonant inductance.

Also provided is a transformer 30 comprising the primary side winding and the secondary side winding. The transformer 30 is connected to a switch-based rectifier 40, which outputs a rectified voltage to a load via a smoothing capacitor 50.

In contrast to the general resonant converter described with reference to Fig. 1, there is additionally provided a voltage sensor 60a configured to measure the voltage across the resonant capacitor 22 of the resonant tank 20. More particularly, there is provided a sensor 60a configured to provide a sensed value of the voltage across the resonant capacitor 22 to a secondary side of the resonant converter.

The sensor 60a comprises a DC block connected to a first (non-grounded) side of the resonant capacitor 22. The DC block comprises a resistor 62 and capacitor 64 connected in series, with the resistor 62 connected between the first side of the resonant capacitor 22 and the capacitor 64 of the DC block. The capacitor 64 enables AC coupling between the primary side of the resonant converter, and the secondary side of the resonant converter.

Accordingly, the DC block is configured to output a sensed value of the voltage on the first side of the resonant capacitor 22.

In the depicted embodiment, the second side of the resonant capacitor 22 (i.e., the side of the resonant capacitor 22 opposite the first side), may be connected to a reference potential. For example, the reference potential may be ground. In other words, the second side of the resonant capacitor 22 may be grounded. In this case, with from the sensed value of the voltage on the first side of the resonant capacitor 22, and the known reference potential on the second side of the resonant capacitor 22, the voltage across the capacitor 22 may be identified.

In some embodiments, and as depicted, the sensor 60a further comprises a voltage divider 66 configured to receive the sensed value of the voltage on the first side of the resonant capacitor 22, and to output a scaled version of the sensed value of the voltage on the first side of the resonant capacitor 22.

The voltage divider 66 may be a resistive voltage divider, or a capacitive voltage divider. The voltage divider 66 may scale/modify the sensed value of the voltage on the first side of the resonant capacitor 22 to facilitate further processing of the sensed value. For example, the voltage divider 66 may scale the sensed value to a value suitable for processing by an ADC for provision of a digital version of the sensed value to a controller 70.

The resonant converter comprises a controller 70 configured to receive the sensed value of the voltage (or the scaled version of the sensed value of the voltage, if a voltage divider 66 is provided) on the first side of the resonant capacitor 22.

In some cases, a sensor interface may be provided to convert (the scaled version of) the sensed value of the voltage to a form suitable for the controller 70. For example, there may be a differential amplifier (for common mode rejection) and then a sampling circuit or and ADC. Nevertheless, other sensor interfaces are possible and would be readily implemented by the skilled person, and may be provided as part of the controller 70.

The controller 70 is further configured to identity a value of the voltage across the resonant capacitor 22 based on the sensed value of the voltage on the first side. When the voltage divider 66 is provided, the controller 70 is further configured to identity a value of the voltage across the resonant capacitor 22 based on the scaled version sensed value of the voltage on the first side.

To be clear, the controller 70 may be configured to identify the value of the voltage across the resonant capacitor 22 at a predefined sampling rate. Indeed, the value of the voltage changes over time, and understanding the voltage signal is important for determining resonant state information. That is, the controller 70 may continuously receive the sensed value of the voltage on the first side of the resonant capacitor 22. These sensed values may be stored for future processing, or may be received and processed in real time.

Furthermore, the controller 70 may be configured to process the identified value of the voltage across the resonant capacitor 22 to identify resonant state information of the resonant converter. Indeed, as already discussed, by knowing the voltage signal across the resonant capacitor 22, the resonant state information of the primary side of the resonant capacitor 22 may be derived.

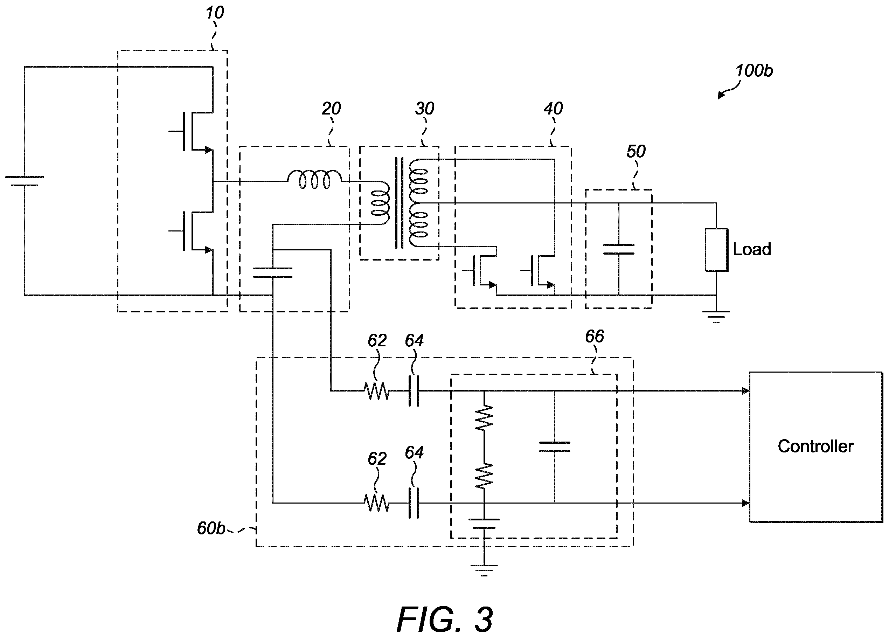

Fig. 3 is a circuit diagram of a resonant converter including a sensor 60b according to another embodiment of the invention. Many aspects of the resonant converter depicted in Fig. 3 are similar to those in Fig. 2, and therefore repeated description is omitted for the sake of brevity. Nevertheless, the key difference of the resonant converter of Fig. 3 is the provision of another DC block on the second side of the resonant capacitor 22.

That is, the second side of the resonant capacitor 22 is also AC coupled to the secondary side of the resonant converter by a capacitor 64 connected in series with a resistor 62 to the second side of the resonant capacitor 22, thus outputting a sensed value of the voltage on the second side of the resonant capacitor 22.

In this case, the sensor 60b may further comprise a voltage divider 66 configured to receive the sensed value of the voltage on the first side of the resonant capacitor 22 and the sensed value of the voltage on the second side of the resonant capacitor 22. The voltage divider 66 then outputs a scaled version of the sensed value on the first side, and a scaled version of the sensed value on the second side.

In other words, the depicted resonant convert provides a differential sensed value of the voltage across the resonant capacitor 22, rather than a single ended reading as provided by the resonant converter of Fig. 2. This may be particularly advantageous, for example, where there may be noise on the second side of the resonant capacitor 22, and/or when the second side of the resonant capacitor 22 is not connected to a reference potential (i.e., is floating).

The sensor 60b my further comprise a voltage divider 66 configured to receive the sensed value of the voltage on the first side of the resonant capacitor 22 and the sensed value of the voltage on the second side of the resonant capacitor 22, and to output a scaled version of the sensed value of the voltage on the first side of the resonant capacitor 22.

The voltage divider 66 may be a resistive voltage divider, or a capacitive voltage divider. The voltage divider 66 may scale/modify the sensed value of the voltage on the first side of the resonant capacitor 22 to facilitate further processing of the sensed value. The voltage divider 66 may also scale/modify the sensed value of the voltage on the second side of the resonant capacitor 22 to facilitate further processing of the sensed value. For example, the voltage divider 66 may scale the sensed value to a value suitable for processing by an ADC for provision of a digital version of the sensed value to a controller 70.

Like above, there may also be provided a sensor interface configured to convert (the scaled version of) the sensed value of the voltage on the first and second side of the resonant capacitor 22 to a form suitable for the controller 70. For example, there may be a differential amplifier (for common mode rejection) and then a sampling circuit or and ADC. Nevertheless, other sensor interfaces are possible and would be readily implemented by the skilled person, and may be provided as part of the controller 70.

The resonant converter may also comprise a controller 70 configured to receive the sensed value, or the scaled version of the sensed value, of the voltage on the first side of the resonant capacitor 22, and receive the sensed value, or the scaled version of the sensed value, of the voltage on the second side of the resonant capacitor 22. From this, the resonant converter may be configured to identify a value of the voltage across the resonant capacitor 22.

The identified value of the voltage across the resonant converter may then be used to derive a resonant state of the resonant converter as described herein.

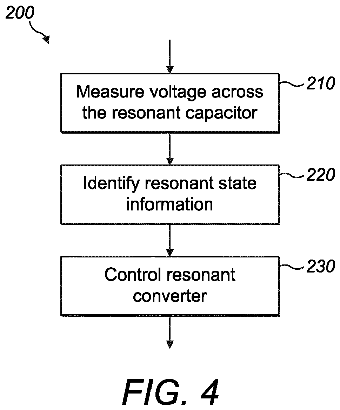

Fig. 4 is a flow diagram of a method for determining a resonant state of a resonant converter. The resonant converter may be any resonant converter as described in reference to Fig. 1. resonant state of a resonant converter.

The resonant state of a resonant converter refers to a state of operation of the primary side of the resonant converter. As is well understood, the resonant converter functions differently depending on the frequency that the switches of the switching bridge are driven compared to the resonant frequency of the resonant converter.

Whilst the switching frequency and the prescribed resonant frequency of the converter may be known, these parameters are subject to noise and slight differences of each component. For example, whilst a capacitance of the resonant converter may be quoted as one value, tolerances may mean that the actual ground-truth capacitance of the capacitor may vary from this value. Hence, the resonant frequency of the resonant converter may vary from the prescribed/expected resonant frequency.

Accordingly, it may be important to directly identify the resonant state of the resonant converter in order to determine appropriate control, telemetry and protection actions.

In step 210, the voltage across the resonant capacitor of the resonant tank is measured. If one side of the resonant capacitor is connected to a reference potential (e.g., ground), then the voltage of the other side of the resonant capacitor may be measured to determine the voltage across the resonant capacitor. If both sides of the resonant capacitor are floating (i.e., neither side connected to a reference potential), then the voltage on both sides of the resonant capacitor may be measured to determine the voltage across the resonant capacitor.

The measured/sensed voltage value may be transferred to a second side of the resonant converter for further processing. That is, the measured voltage value may be transmitted across the isolation boundary of the resonant converter for further processing.

In step 220, the measured voltage is processed to identify resonant state information of the resonant converter. Individual values of the measured voltage may be processed to identify/calculate some resonant state information, whilst a time-series signal of the measured voltage may be processed to identify/calculate other resonant state information.

By way of example, the measured voltage may be differentiated to determine current. A peak measured voltage may be detected to extract an amplitude of the voltage signal across the resonant capacitor. Zero crossing detection may be used to extract phase, frequency and/or timing information.

Generally, the measured may be processed using one or more algorithms to identify a current through the resonant inductance, a current through the parallel inductance or the parallel capacitor, a magnitude of the input DC voltage, an input current received by the switching bridge, an input power to the switching bridge, a drive delay of a switch of the switching bridge, and a switch delay of a switch of the switching bridge.

Of course, other resonant state related parameters may be identified, as would be appreciated by the skilled person.

Finally, in step 230, the resonant converter is controlled based on the identified resonant state information. For example, a timing and/or frequency of switching of the switching bridge may be adjusted based on the resonant state information. Equally, a timing and/or switching frequency of switches of the rectifier 40 may be adjusted based on the resonant state information. By way of further example, parts of the resonant converter may be disconnected in order to protect parts of the resonant converter, based on the resonant state information.

In the claims, any reference signs placed between parentheses shall not be construed as limiting the claim. The word "comprising" does not exclude the presence of elements or steps other than those listed in a claim. The word "a" or "an" preceding an element does not exclude the presence of a plurality of such elements. The embodiments may be implemented by means of hardware comprising several distinct elements. In a device claim enumerating several means, several of these means may be embodied by one and the same item of hardware. The mere fact that certain measures are recited in mutually different dependent claims does not indicate that a combination of these measures cannot be used. Furthermore in the appended claims lists comprising "at least one of: A; B; and C" should be interpreted as (A and/or B) and/or C.

Embodiments as discussed herein may be practiced in various components such as integrated circuit modules. The design of integrated circuits is by and large a highly automated process. Complex and powerful software tools are available for converting a logic level design into a semiconductor circuit design ready to be etched and formed on a semiconductor substrate.

Programs, such as those provided by Synopsys, Inc. of Mountain View, California and Cadence Design, of San Jose, California automatically route conductors and locate components on a semiconductor chip using well established rules of design as well as libraries of pre-stored design modules. Once the design for a semiconductor circuit has been completed, the resultant design, in a standardized electronic format (e.g., Opus, GDSII, or the like) may be transmitted to a semiconductor fabrication facility or "fab" for fabrication.

The following embodiments are disclosed:
1. A resonant converter, comprising:
   a switching bridge configured to receive an input DC voltage, and to output a square wave voltage;
   a resonant tank comprising a resonant capacitor, a resonant inductance, and a parallel inductance or a parallel capacitor, wherein the resonant tank is configured to receive the square wave voltage from the switching bridge, and to produce an intermediate voltage;
   a transformer comprising a primary side winding and a secondary side winding, wherein the primary winding is configured to receive the intermediate voltage, and the secondary side winding is configured to produce a scaled intermediate voltage;
   a rectifier configured to receive the scaled intermediate voltage from the secondary side, and to output an output voltage; and
   a sensor configured to measure a voltage across the resonant capacitor of the resonant tank, the sensor comprising a first DC block connected to a first side of the resonant capacitor, and configured to output a sensed value of the voltage on the first side of the resonant capacitor.
2. The resonant converter of embodiment 1, wherein the first DC block comprises:
   a capacitor; and
   a resistor connected in series with the capacitor between the first side of the resonant capacitor and the capacitor.
3. The resonant converter of embodiment 1 or 2, wherein a second side of the resonant capacitor is connected to a reference potential.
4. The resonant converter of embodiment 3, wherein the sensor further comprises a voltage divider configured to receive the sensed value of the voltage on the first side of the resonant capacitor, and to output a scaled version of the sensed value of the voltage on the first side of the resonant capacitor.
5. The resonant converter of embodiment 1 or 2, wherein the sensor further comprises a second DC block connected to a second side of the resonant capacitor, and configured to output a sensed value of the voltage on the second side of the resonant capacitor.
6. The resonant converter of embodiment 5, wherein the sensor further comprises a voltage divider configured to receive the sensed value of the voltage on the first side of the resonant capacitor and the sensed value of the voltage on the second side of the resonant capacitor, and to output a scaled version of the sensed value on the first side, and a scaled version of the sensed value on the second side.
7. The resonant converter of embodiment 4 or 6, wherein the voltage divider is a capacitive voltage divider.
8. The resonant converter of embodiment 4 or 6, wherein the voltage divider is a resistive voltage divider.
9. The resonant converter of any of embodiments 1-4, further comprising a controller configured to:
   receive the sensed value of the voltage on the first side of the resonant capacitor;
   identity a value of the voltage across the resonant capacitor based on the sensed value of the voltage on the first side.
10. The resonant converter of embodiment 5 or 6, further comprising a controller configured to:
   receive the sensed value of the voltage on the first side of the resonant capacitor;
   receive the sensed value of the voltage on the second side of the resonant capacitor;
   identify a value of the voltage across the resonant capacitor based on the sensed value of the voltage on the first side and the sensed value of the voltage on the second side.
11. The resonant converter of embodiment 9 or 10, wherein the controller is further configured to process the identified value of the voltage across the resonant capacitor to identify resonant state information of the resonant converter.
12. The resonant converter of any of embodiments 9-11, wherein the controller is further configured to process the identified value of the voltage across the resonant capacitor to identify any one or any combination of two or more of:
   a current through the resonant inductance;
   a current through the parallel inductance or the parallel capacitor;
   a magnitude of the input DC voltage;
   an input current received by the switching bridge;
   an input power to the switching bridge;
   a drive delay of a switch of the switching bridge; and
   a switch delay of a switch of the switching bridge.
13. The resonant converter of any of embodiments 1-12, wherein the resonant tank is an LLC resonant tank comprising the resonant capacitor, the resonant inductance, and the parallel inductance, and wherein the resonant inductance and the parallel inductance are provided by the primary side winding of the transformer.
14. The resonant converter of any of embodiments 1-12, wherein the resonant tank is an LCC resonant tank comprising the resonant capacitor, the resonant inductance, and the parallel capacitor, and wherein the resonant inductance is provided by the primary side winding of the transformer.
15. A circuit for measuring a voltage across a resonant capacitor of a resonant tank of a resonant converter, the resonant converter comprising a switching bridge configured to receive an input DC voltage, and to output a square wave voltage; a resonant tank comprising a resonant capacitor, a resonant inductance, and a parallel inductance and/or a parallel capacitor, wherein the resonant tank is configured to receive the square wave voltage from the switching bridge, and to produce an intermediate voltage; a transformer comprising a primary side winding and a secondary side winding, wherein the leakage inductance is provided by the primary side winding, and the transformer is configured to provide a scaled intermediate voltage at the secondary side; a rectifier configured to receive the scaled intermediate voltage from the secondary side, and to output an output voltage, wherein the circuit comprises:
   a first DC block configured to connect to a first side of the resonant capacitor, and configured to output a sensed value of the voltage on the first side of the resonant capacitor.
16. A method for determining a resonant state of a resonant converter, the resonant converter comprising a switching bridge configured to receive an input DC voltage, and to output a square wave voltage; a resonant tank comprising a resonant capacitor, a resonant inductance, and a parallel inductance and/or a parallel capacitor, wherein the resonant tank is configured to receive the square wave voltage from the switching bridge, and to produce an intermediate voltage; a transformer comprising a primary side winding and a secondary side winding, wherein the leakage inductance is provided by the primary side winding, and the transformer is configured to provide a scaled intermediate voltage at the secondary side; a rectifier configured to receive the scaled intermediate voltage from the secondary side, and to output an output voltage, the method comprising:
   measuring a voltage across the resonant capacitor of the resonant tank;
   processing the measured voltage to identify resonant state information of the resonant converter.
17. The method of embodiment 16, further comprising controlling the resonant converter based on the identified resonant state information.

## Claims

1. A resonant converter (100a, 100b), comprising:
a switching bridge (10) configured to receive an input DC voltage, and to output a square wave voltage;
a resonant tank (20) comprising a resonant capacitor (22), a resonant inductance, and a parallel inductance or a parallel capacitor, wherein the resonant tank is configured to receive the square wave voltage from the switching bridge, and to produce an intermediate voltage;
a transformer (30) comprising a primary side winding and a secondary side winding, wherein the primary winding is configured to receive the intermediate voltage, and the secondary side winding is configured to produce a scaled intermediate voltage;
a rectifier (40) configured to receive the scaled intermediate voltage from the secondary side, and to output an output voltage; and
a sensor (60a, 60b) configured to measure a voltage across the resonant capacitor of the resonant tank, the sensor comprising a first DC block connected to a first side of the resonant capacitor, and configured to output a sensed value of the voltage on the first side of the resonant capacitor.

2. The resonant converter of claim 1, wherein the first DC block comprises:
a capacitor (64); and
a resistor (62) connected in series with the capacitor between the first side of the resonant capacitor (22) and the capacitor.

3. The resonant converter of claim 1 or 2, wherein a second side of the resonant capacitor (22) is connected to a reference potential.

4. The resonant converter of any of claims 1-3, wherein the sensor (60a) further comprises a voltage divider (66) configured to receive the sensed value of the voltage on the first side of the resonant capacitor (22), and to output a scaled version of the sensed value of the voltage on the first side of the resonant capacitor.

5. The resonant converter of claim 1 or 2, wherein the sensor (60b) further comprises a second DC block connected to a second side of the resonant capacitor (22), and configured to output a sensed value of the voltage on the second side of the resonant capacitor.

6. The resonant converter of claim 5, wherein the sensor (60b) further comprises a voltage divider (66) configured to receive the sensed value of the voltage on the first side of the resonant capacitor (22) and the sensed value of the voltage on the second side of the resonant capacitor, and to output a scaled version of the sensed value on the first side, and a scaled version of the sensed value on the second side.

7. The resonant converter of any of claims 1-4, further comprising a controller (70) configured to:
receive the sensed value of the voltage on the first side of the resonant capacitor (22);
identity a value of the voltage across the resonant capacitor based on the sensed value of the voltage on the first side.

8. The resonant converter of claim 5 or 6, further comprising a controller (70) configured to:
receive the sensed value of the voltage on the first side of the resonant capacitor (22);
receive the sensed value of the voltage on the second side of the resonant capacitor;
identify a value of the voltage across the resonant capacitor based on the sensed value of the voltage on the first side and the sensed value of the voltage on the second side.

9. The resonant converter of claim 7 or 8, wherein the controller (70) is further configured to process the identified value of the voltage across the resonant capacitor (22) to identify resonant state information of the resonant converter.

10. The resonant converter of any of claims 7-9, wherein the controller (70) is further configured to process the identified value of the voltage across the resonant capacitor (22) to identify any one or any combination of two or more of:
a current through the resonant inductance;
a current through the parallel inductance or the parallel capacitor;
a magnitude of the input DC voltage;
an input current received by the switching bridge (10);
an input power to the switching bridge;
a drive delay of a switch of the switching bridge; and
a switch delay of a switch of the switching bridge.

11. The resonant converter of any of claims 1-10, wherein the resonant tank (20) is an LLC resonant tank comprising the resonant capacitor (22), the resonant inductance, and the parallel inductance, and wherein the resonant inductance and the parallel inductance are provided by the primary side winding of the transformer (30).

12. The resonant converter of any of claims 1-10, wherein the resonant tank (20) is an LCC resonant tank comprising the resonant capacitor (22), the resonant inductance, and the parallel capacitor, and wherein the resonant inductance is provided by the primary side winding of the transformer (30).

13. A circuit (60a, 60b) for measuring a voltage across a resonant capacitor (22) of a resonant tank (20) of a resonant converter (100a, 100b), the resonant converter comprising a switching bridge (10) configured to receive an input DC voltage, and to output a square wave voltage; a resonant tank comprising a resonant capacitor, a resonant inductance, and a parallel inductance and/or a parallel capacitor, wherein the resonant tank is configured to receive the square wave voltage from the switching bridge, and to produce an intermediate voltage; a transformer (30) comprising a primary side winding and a secondary side winding, wherein the leakage inductance is provided by the primary side winding, and the transformer is configured to provide a scaled intermediate voltage at the secondary side; a rectifier (40) configured to receive the scaled intermediate voltage from the secondary side, and to output an output voltage, wherein the circuit comprises:
a first DC block configured to connect to a first side of the resonant capacitor, and configured to output a sensed value of the voltage on the first side of the resonant capacitor.

14. A method for determining a resonant state of a resonant converter, the resonant converter comprising a switching bridge configured to receive an input DC voltage, and to output a square wave voltage; a resonant tank comprising a resonant capacitor, a resonant inductance, and a parallel inductance and/or a parallel capacitor, wherein the resonant tank is configured to receive the square wave voltage from the switching bridge, and to produce an intermediate voltage; a transformer comprising a primary side winding and a secondary side winding, wherein the leakage inductance is provided by the primary side winding, and the transformer is configured to provide a scaled intermediate voltage at the secondary side; a rectifier configured to receive the scaled intermediate voltage from the secondary side, and to output an output voltage, the method comprising:
measuring (210) a voltage across the resonant capacitor of the resonant tank;
processing the measured voltage to identify (220) resonant state information of the resonant converter.

15. The method of claim 14, further comprising controlling (230) the resonant converter based on the identified resonant state information.
